(19) Europäisches Patentamt
European Patent Office
Office européen des brevets

(11) Publication number: **0 193 963 B1**

# (12) EUROPEAN PATENT SPECIFICATION

(45) Date of publication of patent specification: **23.10.91**

(51) Int. Cl.5: **C09D 127/18**, C08L 27/18, C08F 214/26, //(C08F214/26, 216:14)

(21) Application number: **86103004.7**

(22) Date of filing: **06.03.86**

## (54) Aqueous dispersion comprising fluorine-containing copolymer and article coated therewith.

(30) Priority: **06.03.85 JP 45668/85**
**26.06.85 JP 141377/85**

(43) Date of publication of application:
**10.09.86 Bulletin 86/37**

(45) Publication of the grant of the patent:
**23.10.91 Bulletin 91/43**

(84) Designated Contracting States:
**DE FR GB**

(56) References cited:
**EP-A- 0 014 974**
**WO-A-83/04035**

(73) Proprietor: **DAIKIN INDUSTRIES, LIMITED**
**12-39, Umeda 1-chome Kita-ku**
**Osaka-shi Osaka-fu(JP)**

(72) Inventor: **Shimizu, Tetsuo**
**27-104, Shinkoriyama 2-chome**
**Ibaraki Osaka(JP)**
Inventor: **Akamatsu, Masafumi**
**3-7-D1-405, Shinsenri-Minamimachi**
**Toyonaka Osaka(JP)**
Inventor: **Hosokawa, Kazutaka**
**21-21, Hitotsuya 2-chome**
**Settsu Osaka(JP)**
Inventor: **Suzue, Seisuke**
**12-25, Wakazono-cho**
**Ibaraki Osaka(JP)**
Inventor: **Suzuki, Takeshi**
**1-84, Shibanosato**
**Nagaokakyo Kyoto(JP)**

(74) Representative: **Lehn, Werner, Dipl.-Ing. et al**
**Hoffmann, Eitle & Partner Patentanwälte Arabellastrasse 4**
**W-8000 München 81(DE)**

EP 0 193 963 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

### FIELD OF THE INVENTION

The present invention relates to an aqueous dispersion comprising a fluorine-containing copolymer. More particularly, it relates to an aqueous dispersion comprising a tetrafluoroethylene/fluorovinyl ether copolymer, which is particularly useful for imparting non-tackiness to a substrate.

For various applications, a surface of an article made of a metal, a ceramics or a heat resistant rubber is coated with a layer of a fluorine-containing polymer such as polytetrafluoroethylene (hereinafter referred to as "PTFE"), a tetrafluoroethylene/hexafluoropropylene copolymer (hereinafter referred to as "FEP"), a tetrafluoroethylene/perfluoro(alkyl vinyl ether) copolymer (hereinafter referred to as "PFA") since they have excellent non-tackiness, heat resistance, chemical resistance and low friction coefficient.

PTFE and FEP are commercially available in the form of an aqueous dispersion and spray or dip coated on a substrate. FEP and PFA are commercially available in the form of powder having a particle size of 5 to 150 µm for use in electrostatic powder coating. Electrostatic powder coating is, for example, applied to coating a roller installed in a copying machine (cf. Japanese Patent Kokai Publication (unexamined) Nos. 31494/1980 and 24174/1983).

Each of PTFE, FEP and PFA can be prepared in the form of an aqueous dispersion. For example, a mixture of an aqueous dispersion of PTFE and an aqueous dispersion of FEP or PFA is used for coating (cf. Japanese Patent Publication No. 21531/1977 and U.S. Patent No. 4,252,859). However, the aqueous dispersion of PFA alone has rarely been used for coating purpose.

The aqueous dispersion of PFA may be prepared by a method described in, for example, Japanese Patent Publication No. 20788/1973. From the aqueous dispersion prepared by this method, the copolymer is separated and pelletized or powdered and then melt processed. However, when the aqueous dispersion of PFA is coated on a substrate, a thickness of coating should be very thin. When it is thick coated, so-called mud cracking tends to appear on the coating. Further, a surface of the polymer coating has a rough surface.

### SUMMARY OF THE INVENTION

One object of the present invention is to provide a stabilized aqueous dispersion of a copolymer of a specific fluorovinyl ether and tetrafluoroethylene.

Another object of the present invention is to provide an aqueous dispersion of a copolymer of a specific fluorovinyl ether and tetrafluoroethylene which can provide a thick coating of the copolymer having a smooth surface and impart non-tackiness to a substrate to be coated.

According to the present invention, there is provided an aqueous dispersion comprising colloidal particles of a copolymer of tetrafluoroethylene and a fluorovinyl ether of the formula:

$$XCF_2(CF_2)_n-(O\underset{\displaystyle CF_3}{\underset{|}{C}}FCF_2)_m-OCF=CF_2 \qquad (I)$$

wherein X is a hydrogen atom or a fluorine atom, n is an integer of 0 to 7 and m is an integer of 0 to 3 which contains 1 to 10 % by weight of the fluorovinyl ether units and has a specific melt viscosity of 0.3 x $10^4$ to 10.0 x $10^4$ poise (0.3 x $10^4$ - 1 x $10^4$ Pas)and an average particle size of 0.3 to 1 µm, and an anion or nonion surfactant as a stabilizer.

### DETAILED DESCRIPTION OF THE INVENTION

The colloidal particles of the copolymer dispersed in an aqueous medium should have an average particle size of 0.3 to 1 µm, preferably 0.5 to 1.0 µm, more preferably 0.6 to 0.8 µm and a specific melt viscosity of 0.3 x $10^4$ to 10.0 x $10^4$ poise, (0.03 x $10^4$ to 1 x $10^4$ Pas), preferably 0.4 x $10^4$ to 5.0 x $10^4$ poise (0.04 x $10^4$ to 0.5 x $10^4$ Pas).The average particle size of the copolymer of the invention is larger than that of the conventional PFA. With the aqueous dispersion of the dispersion, one application of the dispersion can form a coating having a thickness of at least 25 µm, particularly at least 35 µm. The surface roughness can be reduced to less than 0.5 µm. The coating having such excellent surface smoothness can

be used without surface abrasion.

From a commercially available aqueous dispersion containing PTFE or FEP, a coating having a thickness of 10 to 20 µm is formed by one application. Such thin coating is not sufficient for a coating of, for example, a fixing roller of a copying machine, since the roller must be coated with a coating having a thickness of at least 25 µm so as to maintain a enough thickness after having been abrased. On the contrary, the coating formed by electrostatic powder coating has a thickness of at least 100 µm. However, such thick coating should be abrased too much, which results in waste of the polymeric material and increase of the number of processing steps.

When the specific melt viscosity of the copolymer exceeds the above upper limit, the mud cracking tends to appear in the coating even if the average particle size is in the above range. In such coating having mud cracking should be abrased to a great extent, which is also uneconomical. In an extreme case, any coating having a enough thickness cannot be obtained. When the specific melt viscosity of the copolymer is smaller than the above lower limit, the coating of the copolymer has poor mechanical strength and becomes brittle.

The copolymer to be contained in the aqueous dispersion of the invention is known and disclosed in, for example, U.S. Patent No. 4,499,249.

The aqueous dispersion of the invention may be prepared as follows:

Firstly, tetrafluoroethylene and the fluorovinyl ether (I) are emulsion polymerized by a conventional method. The produced latex is then concentrated followed by the addition of the anionic or nonionic surfactant to stabilize the dispersion. If necessary, a thickener may be added to the dispersion.

The emulsion polymerization may be effected by a so-called seed polymerization in which the final average particle size can be controlled by adjusting an amount of a seed to be used. The melt viscosity of the copolymer can be controlled by adjusting an amount of a chain transfer agent, an amount of an polymerization initiator and/or a reaction temperature. The chain transfer agent is an organic compound which have a hydrogen atom and is in a liquid state under the polymerization conditions. Specific examples of the chain transfer agent are lower alcohol (e.g. methanol and ethanol) and alkyl halides (e.g. dichloromethane, trichloromethane tetrachloromethane and dichloroethane). Preferred examples of the polymerization initiator are water soluble organic or inorganic peroxide compounds (e.g. disuccinic acid peroxide, ammonium persulfate, potassium persulfate and the like). In addition, a reducing agent (e.g. ammonium sulfite, sodium hydrogen sulfite, sodium thiosulfate and the like) can be used together with the above peroxide.

As described in the above, the particle size of the copolymer to be dispersed is comparatively large. Therefore, a viscosity of the dispersion is preferably increased to prevent sedimentation of the colloidal particles of the copolymer. In addition, even when the particles are sedimentated, they should be easily redispersed. For these purposes, the dispersion contains anionic and nonionic surfactant.

A typical nonionic surfactant is a reaction product of ethylene oxide providing a hydrophilic site and a compound providing a hydrophobic site (e.g. propylene oxide, saturated or unsaturated alcohol and alkyl phenol). Preferred examples of the nonionic surfactant are oxyethylene/oxypropylene block copolymer having a molecular weight of 1,000 to 4,000 of the formula:

$$HO(C_2H_4O)_a\text{-}(C_3H_6O)_b\text{-}(C_2H_4O)_cH$$

wherein the sum of a, b and c is at least 18 and not more than 85, and a compound of the formula:

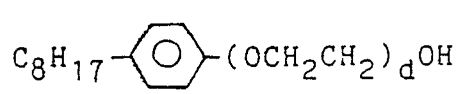

wherein d is an integer of 4 to 20.

The anionic surfactant includes dialkylsulfosuccinate, dodecylbenzenesulfonate, soap of fatty acid and the like. To increase the viscosity of the dispersion, a water soluble polymer (e.g. sodium alginate), salts of polyacrylic acid and cellulose acetate or an inorganic salt (e.g. ammonium phosphate, potassium sulfate and the like). To improve the film-forming property of the dispersion, a water insoluble organic solvent (e.g. benzene, toluene and xylene) may be added and emulsified in the aqueous medium.

The amount of the anionic or nonionic surfactant contained in the dispersion is 3 to 20 % by weight, preferable 4 to 10 % by weight based on the weight of the copolymer contained in the dispersion. Too much surfactant deteriorates the properties of the coating since it is difficult to evaporate all the surfactant when the coating is baked. In addition, too much surfactant and/or thickener make the application of the

dispersion difficult. Usually, the dispersion of the present invention has a viscosity of 50 to 1,000 poise,(5-100 Pas) preferably 100 to 400 poise (10-40 Pas) at 25° C.

The content of the copolymer in the dispersion is preferably 20 to 65 % by weight based on the total weight of the dispersion.

The dispersion can be coated on various substrates such as fixing rollers, rollers to be used in the processing of foods, trays and cooking utensils.

The present invention will be hereinafter explained further in detail by following examples.

Properties of the copolymer, coating characteristics and properties of the coating are measured or evaluated as follows:

Specific melt viscosity

A Koka-type flow tester (manufactured by Shimadzu) is used. A copolymer powder (2.0 g) is charged in a cylinder of 11.3 mm in inner diameter and kept at 380° C for 5 minutes. Then, the copolymer is extruded from an orifice of 2.1 mm in inner diameter and 8 mm in length under piston load of 7 Kg. Specific melt viscosity is calculated by dividing 53,150 by the extrusion rate (g/min.).

Average particle size

A quantity of a latex freshly prepared but not concentrated is photographed with a transmission electron microscope and diameters of about 100 to 400 particles in a determined direction are measured and averaged.

Evaluation of properties of coating

An aqueous dispersion of the copolymer is spray coated on an aluminum plate with 5 cm in width, 40 cm in length and 1 mm in thickness which has been washed and defatted with acetone. A spray gun used has a nozzle aperture of 0.8 to 1.1 mm in diameter, and spray pressure is about 3 $Kg/cm^2$. An amount of the dispersion to be coated is so adjusted that the coating after baking has a thickness of 10 to 50 $\mu$m. After spraying, the applied dispersion was pre-dried in an infrared oven kept at about 100° C and baked in an electric furnace kept at 400° C for 20 minutes. Then, the coated plate is removed from the furnace and cooled to a room temperature.

The thickness of the coating is measured by means of a surface layer thickness measuring device. At a some certain thickness of the coating, mud cracking is observed. The maximum thickness at which any mud cracking is not observed is measured as a threshold cracking thickness.

Surface roughness of the coating is measured by means of a universal type surface condition measuring device (SE-3C manufactured by Kosaka Kenkyusho). Since the thickness of the coating influences the surface roughness, the measurement is carried out with a coating of about 20 $\mu$m in thickness.

Example 1

(1) Preparation of seed latex

In a 6 liter stainless steel made autoclave equipped with a temperature controlling jacket and an anchor agitator, deionized water (2.9 l), trichlorotrifluoroethane as a dispersion stabilizer (400 g), ammonium perfluorooctanoate (9.0 g) and methanol as a chain transfer agent (2 ml) were charged. The interior of the autoclave was replaced with nitrogen gas twice and then with tetrafluoroethylene (hereinafter referred to as "TFE") gas twice to purge oxygen. Thereafter, perfluoro(propyl vinyl ether) (hereinafter referred to as "PPVE") (70 g) was added. The mixture was heated to 65° C with stirring and then TFE gas was injected to pressurize the interior pressure to 9.2 $Kgf/cm^2$. To the mixture, an aqueous solution (100 ml) containing ammonium persulfate (hereinafter referred to as "APS") (4.2 g) was added to initiate the reaction. During the reaction, TFE gas was injected to keep the pressure at 9.2 $Kgf/cm^2$, and the reaction temperature was kept at 65 ± 1° C.

After continuing the reaction for 4.7 hours, the stirring was stopped and the gaseous compounds were purged so as to reduce the interior pressure to atmospheric pressure. The produced latex contained 20.6 % by weight of the copolymer having an average particle size of 0.18 $\mu$m and a melt viscosity of 1.0 x $10^4$ poise (0.1 x $10^4$ Pas) and containing 3.2 % by weight of the repeating units derived from PPVE. (The latex

obtained in this step was used as a sample in Comparative Example 1).

A content of PPVE units in a copolymer is calculated according to the following equation from degrees (D) of the characteristic absorbance at 2,360 $cm^{-1}$ and 995 $cm^{-1}$ in infrared spectrum measured with a film of about 0.05 mm in thickness by means of an infrared spectrophotometer;

$$\text{Content (\%)} = 0.95 \times \frac{D_{995\ cm^{-1}}}{D_{2,360\ cm^{-1}}}$$

(2) Preparation of a dispersion of the invention

In the same autoclave as used in the above step (1), deionized water, trichlorotrifluoroethane and ammonium perfluorooctanoate were charged in the same amounts as in the step (1). Methanol (11 ml) and the latex prepared in the step (1) (250 g) were charged. After purging oxygen, PPVE (70 g) was added and then the same aqueous solution of APS (4.2 g) as used in the step (1) was added to initiate the reaction. The reaction pressure and temperature were the same as in the step (1). The reaction time and the properties of the prepared latex are as shown in Table 1.

After separating the organic layer containing trifluorotrichloroethane and unreacted PPVE, the latex prepared in the step (2) was mixed with an aqueous solution of a nonionic surfactant containing 20 parts by weight of polyoxyethylene octylphenol ether (Nonion HS-208, a trade name of Nippon Fat and Oil) in an amount of 30 g per liter of the latex. The mixture was kept standing at 30 ± 1 °C for about 20 hours, and the upper layer was discarded to obtain the concentrated latex containing at least 60 % by weight of the copolymer. To improve the stability of the latex, water and Nonion HS 208 were added to the latex so as to adjust the content of the copolymer to 50 % by weight and the amount of the nonionic surfactant to 5 % by weight based on the weight of the copolymer.

The stabilized polymer latex was subjected to the evaluation of properties of the coating.

The melt viscosity of the copolymer was measured with copolymer powder prepared by drying a part of the latex just after the polymerization and washing the residue with acetone and drying it. The content of perfluoro(propyl vinyl ether) in the copolymer was measured by heat pressing a part of the copolymer powder at 350 °C for 15 minutes to form a film of about 0.05 mm in thickness and subjecting it to infrared spectroscopic analysis.

As shown in Table 2, the coating of the copolymer had threshold cracking thickness of 26 to 30 µm and the surface roughness of 0.40 µm. On the contrary, the coating of the copolymer of Comparative Example 1 (namely that obtained in the step 1) had much smaller threshold cracking thickness and larger surface roughness.

Examples 2 to 5

In Example 2, the seed polymerization was carried out by using the same seed latex as used in Example 1. In Examples 3 to 5, the polymerisation was carried out by using a part of the latex prepared in the step 2 of Example 1, namely the copolymers were prepared by two stage seed polymerization. The amounts of methanol and APS used in these examples are shown in Table 1. Other polymerization conditions were the same as in Example 1.

The threshold cracking thickness and surface roughness of the coating of the copolymer are shown in Table 2.

Example 6

In the same manner as in the step 2 of Example 1 but charging 150 g of PPVE, the copolymer was seed polymerized for 5.1 hours to obtain a latex containing 19.0 % by weight of the copolymer. The average particle size, melt viscosity and content of PPVE of the copolymer and properties of the coating are shown in Tables 1 and 2, respectively.

Example 7

In the same manner as in the step 1 of Example 1 but using dichloromethane (66 g) in place of methanol, initiating the reaction by adding 50 ml of an aqueous solution of APS (4.2 g) in water (50 ml) and then a solution of sodium sulfite (2.3 g) in water (50 ml) and carrying out the reaction at 35 ± 1 °C, a latex was prepared. During the reaction, the TFE was injected into the autoclave to keep the pressure at 9.2 $Kgf/cm^2$.

Thereafter, the reaction was terminated in the same manner as in the step 1 of Example 1 to obtain a latex containing 19.0 % by weight of the copolymer having an average particle size of 0.18 µm, a melt viscosity of $3.3 \times 10^4$ poise and a content of PPVE of 2.7 % by weight.

In the same autoclave as used in Example 1, a part of the prepared latex (250 g) was charged as a seed latex together with deionized water, trichlorotrifluoroethane, ammonium perfluorooctanoate and PPVE in the same amounts as in the step 1 of Example 1. Then, dichloromethane (90 g) was added as a chain transfer agent. The APS and sodium sulfite were added in the same amount as in the previous step to initiate the polymerization. The polymerization was continued for 14 hours at the same reaction temperature and pressure as in the previous step to obtain a latex containing 18.7 % by weight of the copolymer having an average particle size of 0.35 µm, a melt viscosity of $2.1 \times 10^4$ poise ($0.21 \times 10^4$ Pas) and containing 3.0 % by weight of PPVE.

The raw latex was post treated in the same manner as in Example 1. The properties of the coating were examined. The coating had a threshold cracking thickness of 30 to 35 µm and surface roughness of 0.50 µm

Comparative Examples 1 to 5

As a sample in Comparative Example 1, the latex prepared in the step 1 of Example 1 was used.

In Comparative Example 2 and 3, the copolymers were prepared in the same manner as in the step 1 of Example 1 but varying the amount of methanol so as to alter the melt viscosity of the copolymers.

In Comparative Examples 4 and 5, the copolymers were prepared by seed polymerization in the same manner as in the step 2 of Example 1 but using the latexes prepared in Comparative Example 2 and 1, respectively and varying the polymerization conditions as shown in Table 1.

The properties of coating of the copolymers are shown in Table 2. Although the copolymer of Comparative Example 4 had a large particle size, its coating had large surface roughness due to its large melt viscosity. Although the copolymer of Comparative Example 5 had good threshold cracking thickness and surface roughness, it had too poor coating strength to be practically used.

Comparative Example 6

The seed latex prepared in Example 7 was used as a sample latex. Average particle size, 0.18 µm. Melt viscosity, $3.3 \times 10^4$ poise ($0.33 \times 10^4$ Pas). Content of PPVE, 2.7 % by weight. Threshold cracking thickness, 20 to 25 µm. Surface roughness, 0.80 µm.

Table 1

| Example No. | 1 | 2 | 3 | 4 | 5 | 6 | Com. 1 | Com. 2 | Com. 3 | Com. 4 | Com. 5 |
|---|---|---|---|---|---|---|---|---|---|---|---|
| Seed latex (g) | Com. 1 (250) | Com. 1 (250) | Ex. 1 (150) | Ex. 1 (150) | Ex. 1 (150) | Com. 1 (250) | --- | --- | --- | Com. 2 (100) | Com. 1 (250) |
| Methanol (g) | 11 | 30 | 3 | 10 | 20 | 11 | 2.0 | 0.40 | 10 | 0.30 | 60 |
| APS (g) | 4.2 | 4.2 | 4.2 | 4.2 | 1.4 | 4.2 | 4.2 | 4.2 | 4.2 | 4.2 | 4.2 |
| Reaction time (hrs) | 4.6 | 6.1 | 5.6 | 6.3 | 11 | 5.1 | 4.7 | 4.3 | 5.5 | 3.4 | 7.6 |
| Copolymer content in raw latex (wt.%) | 18.8 | 18.5 | 16.4 | 17.2 | 18.1 | 19.0 | 20.6 | 20.5 | 19.7 | 18.7 | 18.2 |
| Average particle size (μm) | 0.33 | 0.31 | 0.56 | 0.51 | 0.72 | 0.32 | 0.18 | 0.17 | 0.21 | 0.35 | 0.34 |
| Specific melt viscosity ($x10^4$ poise) ($x10^4$ Pas) | 1.4 (0.14) | 0.4 (0.04) | 2.4 (0.24) | 0.7 (0.07) | 2.8 (0.28) | 1.6 (0.16) | 1.0 (0.1) | 14 (1.4) | 0.5 (0.05) | 40 (4) | 0.2 (0.02) |
| PPVE content (wt. %) | 3.0 | 3.2 | 2.5 | 2.5 | 2.3 | 6.4 | 3.2 | 3.5 | 3.6 | 3.4 | 2.4 |

Table 2

| Example No. | 1 | 2 | 3 | 4 | 5 | 6 | Com. 1 | Com. 2 | Com. 3 | Com. 4 | Com. 5 |
|---|---|---|---|---|---|---|---|---|---|---|---|
| Threshold cracking thickness (μm) | 25-30 | 25-30 | 30 | 40-45 | 45-50 | 30 | 15-20 | 10 | 20-25 | 5-10 | 40-45 |
| Surface roughness (μm) | 0.40 | 0.25 | 0.45 | 0.30 | 0.25 | 0.35 | 1.3 | 1.6[1)] | 0.50 | 1.5[1)] | 0.30[2)] |

Note: 1) Measured with a coating of 10 μm.
2) Mud cracking appeared on the coating after several days.

## Claims

1. An aqueous dispersion comprising colloidal particles of a copolymer of tetrafluoroethylene and a fluorovinyl ether of the formula:

$$XCF_2(CF_2)_n-(OCFCF_2)_m-OCF=CF_2 \quad \text{(with } CF_3 \text{ branch on the first carbon of } OCFCF_2\text{)} \qquad (I)$$

wherein X is a hydrogen atom or a fluorine atom, n is an integer of 0 to 7 and m is an integer of 0 to 3 which contains 1 to 10 % by weight of the fluorovinyl ether units and has a specific melt viscosity of $0.3 \times 10^4$ to $10.0 \times 10^4$ poise ($0.03 \times 10^4$ to $1 \times 10^4$ Pas) and an average particle size of 0.3 to 1 $\mu$m, and an anionic or nonionic surfactant as a stabilizer.

2. The aqueous dispersion according to claim 1, wherein the fluorovinyl ether is a compound of the formula:

$C_3F_7OCF=CF_2$.

3. The aqueous dispersion according to claim 1, wherein the copolymer has an average particle size of 0.5 to 1.0 $\mu$m and a specific melt viscosity of $0.4 \times 10^4$ to $5.0 \times 10^4$ poise ($0.04 \times 10^4$ to $0.5 \times 10^4$ Pas).

4. The aqueous dispersion according to claim 3, wherein the copolymer has an average particle size of 0.6 to 0.8 $\mu$m.

5. An article coated with a non-tacky coating prepared applying an aqueous dispersion of claim 1 on a surface of the article and drying and baking the dispersion to form a coating of the copolymer on the surface.

**Revendications**

1. Une dispersion aqueuse comprenant des particules colloïdales d'un copolymère de tétrafluoroéthylène et d'un éther fluorovinylique de formule :

$$XCF_2(CF_2)_n-(OCFCF_2)_m-OCF=CF_2 \quad \text{(with } CF_3 \text{ branch on the first carbon of } OCFCF_2\text{)} \qquad (I)$$

dans laquelle X est un atome d'hydrogène ou un atome de fluor, n est un entier de 0 à 7 et m est un entier de 0 à 3, qui contient 1 à 10 % en poids de motifs de l'éther fluorovinylique et qui a une viscosité spécifique à l'état fondu de $0,3.10^4$ à $10,0.10^4$ poises ($0,03.10^4$ à $1.10^4$ Pas) et une dimension moyenne de particules de 0,3 à 1 $\mu$m et un tensioactif anionique ou non ionique comme stabilisant.

2. La dispersion aqueuse selon la revendication 1, dans laquelle l'éther fluorovinylique est un composé de formule :

$C_3F_7OCF=CF_2$.

3. La dispersion aqueuse selon la revendication 1, dans laquelle le copolymère a une dimension moyenne de particules de 0,5 à 1,0 $\mu$m et une viscosité spécifique à l'état fondu de $0,4.10^4$ à $5,0.10^4$ poises ($0,04.10^4$ à $0,5.10^4$ Pa.s).

4. La dispersion aqueuse selon la revendication 3, dans laquelle le copolymère a une dimension moyenne de particules de 0,6 à 0,8 $\mu$m.

5. Un article revêtu avec un revêtement non collant préparé en appliquant une dispersion aqueuse selon la revendication 1 sur une surface de l'article et en séchant et cuisant la dispersion pour former un revêtement du copolymère sur la surface.

## Patentansprüche

1. Wäßrige Dispersion umfassend kolloidale Teilchen eines Copolymers von Tetrafluorethylen und einem Fluorvinylether der Formel

$$XCF_2(CF_2)_n-(O\underset{\displaystyle CF_3}{\underset{|}{C}}FCF_2)_m-OCF=CF_2 \qquad (I)$$

worin X ein Wasserstoffatom oder ein Fluoratom ist, n 0 oder eine ganze Zahl bis 7 ist und m 0 oder eine ganze Zahl bis 3 ist, die 1 bis 10 Gew.-% an den Flurvinylether-Einheiten enthält und eine spezifische Schmelzviskosität von 0,3 x $10^4$ bis 10,0 x $10^4$ Poise (0,03 x $10^4$ bis 1 x $10^4$ Pas) und eine durchschnittliche Teilchengröße von 0,3 bis 1 $\mu$m hat und ein anionisches oder nichtionisches oberflächenaktives Mittel als Stabilisator enthält.

2. Wäßrige Dispersion gemäß Anspruch 1, in welcher der Fluorvinylether eine Verbindung der Formel

$C_3F_7OCF=CF_2$

ist.

3. Wäßrige Dispersion gemäß Anspruch 1, in welcher das Copolymer eine durchschnittliche Teilchengröße von 0,5 bis 1,0 $\mu$m und eine spezifische Schmelzviskosität von 0,4 x $10^4$ bis 5,0 x $10^4$ Poise (0.04 x $10^4$ bis 0,5 x $10^4$ Pas) hat.

4. Wäßrige Dispersion gemäß Anspruch 3, in welcher das Copolymer eine durchschnittliche Teilchengröße von 0,6 bis 0,8 $\mu$m hat.

5. Ein mit einem nichtklebrigen Überzug überzogener Gegenstand, hergestellt, indem man eine wäßrige Dispersion gemäß Anspruch 1 auf eine Oberfläche des Gegenstandes aufbringt, und die Dispersion trocknet und einbrennt unter Ausbildung eines Überzugs aus dem Copolymer auf der Oberfläche.